# EUROPEAN PATENT APPLICATION

(11) **EP 4 794 060 A1**
(43) Date of publication of application: **19.08.2026**
(21) Application number: 26158115.1
(22) Date of filing: 12.02.2026
(51) Int. Cl.: H01M 10/615, H01M 10/617, H01M 10/653, H01M 10/6571, H01M 10/658, H01M 50/204

(54) **BATTERY PACK AND ENERGY STORAGE DEVICE**

(30) Priority: 14.02.2025 CN 202520235316 U
(71) Applicant: Huawei Technologies Co., Ltd., Shenzhen, Guangdong 518129 (CN)
(72) Inventor: JIANG, Rui, Shenzhen, Guangdong, 518129 (CN); XU, Xinyu, Shenzhen, Guangdong, 518129 (CN); XIAO, Guannan, Shenzhen, Guangdong, 518129 (CN); MA, Jianzhen, Shenzhen, Guangdong, 518129 (CN)
(74) Representative: Maiwald GmbH

(57) **Abstract**

Embodiments of this application relate to the field of energy storage technologies, and a battery pack and an energy storage device are provided. A heating film is disposed in the battery pack, to increase a temperature of an operating environment of a cell in the battery pack. Wiring density of heating wires at different positions in the heating film is controlled, to control heating efficiency at the different positions in the heating film, and selectively heat cells at the different positions to different extents, so that different cells of the battery pack can be heated to a preset temperature range. In this way, temperatures of the different cells of the battery pack may be neither excessively low to result in low charging/discharging efficiency, and nor excessively high to affect a service life or safety performance of the cells. Therefore, a service life and safety performance of the battery pack are effectively improved while charging/discharging efficiency of the battery pack is ensured, thereby improving a service life and safety of the energy storage device.

## Description

### TECHNICAL FIELD

This application relates to the field of energy storage technologies, and in particular, to a battery pack and an energy storage device.

### BACKGROUND

In a related technology, a battery pack in a low-temperature operating environment uses a heating film to heat a plurality of cells in the battery pack, to increase a temperature of the operating environment of the battery pack, so that charging/discharging efficiency of the battery pack is improved. However, arrangement of the heating film in the related technology may result in a large temperature difference and poor consistency of the plurality of cells in the battery pack. In this case, a service life of the cell is affected, and further, thermal runaway of the cell may be caused, consequently reducing a service life and lowering safety of the battery pack.

### SUMMARY

Embodiments of this application provide a battery pack and an energy storage device, to improve a service life and safety performance of the battery pack.

According to a first aspect, an embodiment of this application provides a battery pack. The battery pack includes a housing and a plurality of cells and a heating film that are disposed in the housing. The plurality of cells are arranged in a first direction. The heating film is attached to the plurality of cells. Two ends of the heating film in the first direction extend to two ends of the plurality of cells. In the first direction, wiring density of a heating wire in a middle part of the heating film is lower than wiring density of heating wires at the two ends of the heating film. In the first direction, heat dissipation effect of cells at the two ends in the plurality of cells is good, and heat dissipation effect of cells in a middle part is poor. Therefore, in the first direction, the wiring density of the heating wire in the middle part of the heating film is set to be lower than the wiring density of the heating wires at the two ends of the heating film. Higher wiring density of the heating wire indicates higher heating efficiency of the heating film, and lower wiring density of the heating wire indicates lower heating efficiency of the heating film. Because the density of the heating wire in the middle part of the heating film is lower, heating effect of the heating film for the cells located in the middle part is poorer. In addition, because the density of the heating wires at the two ends of the heating film is higher, the cells at the two ends can obtain higher heating efficiency from the heating film. In this way, the cells with poorer heat dissipation effect can obtain low heating efficiency, and the cells with better heat dissipation effect can obtain higher heating efficiency from the heating film, so that a temperature difference between the plurality of cells can be effectively reduced, temperature consistency of the plurality of cells is better, and a service life and safety performance of the battery pack can be effectively improved.

In some embodiments, the heating film is configured to make the plurality of cells all be within a preset temperature range, where the temperature difference between the plurality of cells is less than a threshold. Because the heating film may make the plurality of cells all be within the preset temperature range, charging/discharging efficiency of the battery pack can be effectively improved. In addition, the temperature difference between the plurality of cells may be less than the threshold, to avoid a large temperature difference between the plurality of cells, avoid a case such as occurrence of an excessively high temperature of a high-temperature cell when a low-temperature cell reaches a target temperature, and avoid short-board effect in the battery pack caused by an excessively large temperature difference between the cells, thereby reducing impact on performance and the service life of the battery pack, and further reducing safety risks such as thermal runaway of the battery pack. In conclusion, the service life and the safety performance of the battery pack are effectively improved while the charging/discharging efficiency of the battery pack in this embodiment can be ensured.

In some embodiments, the heating film includes a plurality of regions arranged in the first direction. The plurality of regions include a first region and a second region and a third region that are located on two sides of the first region. The first region corresponds to the middle part of the heating film. The second region and the third region correspond to the two ends of the heating film. Wiring density of a heating wire in the first region is lower than wiring density of a heating wire in the second region and wiring density of a heating wire in the third region. The wiring density of the heating wire in the second region is lower than the wiring density of the heating wire in the third region. The wiring density of the heating wire in the third region is higher than the wiring density of the heating wire in the second region, so that heating efficiency of the heating wire in the third region is higher than heating efficiency of the heating wire in the second region. The heating efficiency of the heating wire in the third region is designed to be different from the heating efficiency of the heating wire in the second region, and after a plurality of battery packs are arranged at a short distance in a cabinet body, temperature uniformity of different cells in the battery pack obtained after the cells are heated by the heating film can be effectively ensured.

In some embodiments, the first region is used to heat a first cell of the plurality of cells, that is, the first cell is disposed in the first region. The second region is used to heat a second cell of the plurality of cells, that is, the second cell is disposed in the second region. The third region is used to heat a third cell of the plurality of cells, that is, the third cell is disposed in the third region. The first cell is located between the second cell and the third cell in the first direction. Different cells in different regions are differentially heated, to improve precise control for temperatures of the different cells, and effectively improve temperature uniformity of the plurality of cells, thereby improving the service life and the safety performance of the battery pack.

In some embodiments, the first region includes a fourth region and a fifth region that are arranged in the first direction. The fourth region is located on a side that is of the fifth region and that is close to the second region. Wiring density of a heating wire in the fifth region is higher than wiring density of a heating wire in the fourth region. Because ends at which second regions of two adjacent battery packs are located are close to each other in the first direction, heat dissipation effect of an end corresponding to the second region is poor. In this case, heat dissipation effect of a cell corresponding to the fourth region adjacent to the second region is lower than that of a cell corresponding to the fifth region adjacent to the third region. To ensure temperature uniformity of a heated cell corresponding to the fourth region and a heated cell corresponding to the fifth region, the wiring density of the heating wire in the fifth region is higher than the wiring density of the heating wire in the fourth region, so that the cell corresponding to the fourth region and the cell corresponding to the fifth region can be differentially heated, and a temperature difference between the heated cell corresponding to the fourth region and the heated cell corresponding to the fifth region is controlled within the threshold, to improve the temperature uniformity of the plurality of cells, and improve the service life and the safety performance of the battery pack.

In some embodiments, the heating wire in the first region, the heating wire in the second region, and the heating wire in the third region are connected in series. To be specific, a heating wire of the heating film at a position corresponding to the first cell, a heating wire of the heating film at a position corresponding to the second cell, a heating wire of the heating film at a position corresponding to the third cell, and heating wires of the heating film at positions corresponding to a plurality of fourth cells are connected in series. Because the heating wire in the first region, the heating wire in the second region, and the heating wire in the third region are connected in series, a same current flows through the heating wire in the first region, the heating wire in the second region, and the heating wire in the third region, to effectively and precisely control heating power of each region, and improve temperature uniformity of the plurality of cells obtained after being heated.

In some embodiments, the heating wire in the first region, the heating wire in the second region, and the heating wire in the third region are connected in parallel. To be specific, a heating wire of the heating film at a position corresponding to the first cell, a heating wire of the heating film at a position corresponding to the second cell, a heating wire of the heating film at a position corresponding to the third cell, and heating wires of the heating film at positions corresponding to a plurality of fourth cells are connected in parallel. Because the heating wire in the first region, the heating wire in the second region, and the heating wire in the third region are connected in parallel, the heating wire in the first region, the heating wire in the second region, and the heating wire in the third region can be independently controlled, to appropriately heat the different cells as required.

In some embodiments, a heating wire of the heating film is evenly arranged in a second direction, and the second direction is disposed perpendicular to the first direction. To be specific, the heating wire in the first region is arranged with evenly spaced wiring in the second direction, the heating wire in the second region is arranged with evenly spaced wiring in the second direction, the heating wire in the third region is arranged with evenly spaced wiring in the second direction, and the second direction is disposed perpendicular to the first direction. Because the heating wire of the heating film is evenly arranged in the second direction, it is convenient to calculate power of the heating wire in each region. In addition, even arrangement of the heating wire of the heating film in the second direction helps improve temperature uniformity of the cell during heating.

In some embodiments, from the middle part of the heating film to either end of the heating film in the first direction, wiring density of the heating wire in the heating film gradually increases. In the plurality of cells, the heat dissipation effect of the cells located in the middle in the first direction is the worst, the heat dissipation effect of the cells at the two ends are the best, and the heat dissipation effect exhibits a gradually change trend. Therefore, in this embodiment, the wiring density of the heating wire in the heating film gradually increases from the middle part of the heating film to the either end of the heating film in the first direction, and temperatures of the plurality of cells can be controlled more precisely, so that the temperature uniformity of the plurality of cells is better.

In some embodiments, the heating film is disposed between a side plate of the housing and the plurality of cells. The heating film is disposed between the side plate of the housing and the plurality of cells, so that the cell can be heated by the heating film, a thermally conductive layer of the heating film is insulative, and the heating film can further be utilized to insulatively isolate the plurality of cells from the side plate, thereby making the heating film serve double functions, and increasing a function of the battery pack without complicating a structure of the battery pack.

In some embodiments, the heating film is disposed between a bottom plate of the housing and the plurality of cells. The heating film is disposed between the bottom plate of the housing and the plurality of cells, so that the cell can be heated by the heating film, a thermally conductive layer of the heating film is insulative, and the heating film can further be utilized to insulatively isolate the plurality of cells from the bottom plate, thereby making the heating film serve double functions, and increasing a function of the battery pack without complicating a structure of the battery pack.

In some embodiments, the battery pack further includes a heat insulation film, and the heat insulation film is disposed between the heating film and the housing. The heat insulation film is disposed between the heating film and the housing, to effectively reduce release of heat generated by the heating film from the housing to the outside, and the cell is heated more effectively, thereby improving heating efficiency for the cell, and effectively reducing initial preset power of the heating film.

According to a second aspect, an embodiment of this application provides an energy storage device. The energy storage device includes a cabinet body and a plurality of battery packs according to any one of the first aspect. The plurality of battery packs are disposed in the cabinet body.

In some embodiments, a heating film includes a second region and a third region that are opposite to each other in a first direction. To be specific, regions corresponding to two ends of the heating film in the first direction are respectively the second region and the third region. Wiring density of a heating wire in the second region is lower than wiring density of a heating wire in the third region. Two adjacent first battery packs are arranged in the first direction. In two heating films in the two adjacent battery packs, two second regions are located between two third regions in the first direction. In other words, the second regions of the two adjacent battery packs are close to each other. Because the second regions of the two adjacent battery packs are close to each other, and the wiring density of the heating wire in the second region is lower than the wiring density of the heating wire in the third region, heating efficiency of the second region is lower than that of the third region. Because the second regions of the two adjacent battery packs are close to each other, heat dissipation effect of the second regions of the two adjacent battery packs is poor, a cell corresponding to the second region with poor heat dissipation efficiency is heated through the second region with poor heating efficiency, and a cell corresponding to the third region with high heat dissipation efficiency is heated through the third region with high heating efficiency, so that temperature uniformity of the cell corresponding to the second region and the cell corresponding to the third region can be effectively improved, to improve a service life and safety of the battery pack.

### BRIEF DESCRIPTION OF DRAWINGS

To describe technical solutions in embodiments of this application or the conventional technology more clearly, the following briefly describes the accompanying drawings for describing embodiments or the conventional technology.
FIG. 1 is a diagram of a structure of an energy storage device according to an embodiment;
FIG. 2 is a diagram of a structure of a battery pack according to an embodiment of this application;
FIG. 3 is an exploded view of a heating film according to the embodiment in FIG. 2;
FIG. 4 is a diagram of wiring of a heating wire in a heating film according to the embodiment in FIG. 2;
FIG. 5A is a diagram of simulated temperatures of cells at different positions in a battery pack when a heating film is not started;
FIG. 5B is a diagram of simulated temperatures when the heating film of the battery pack in FIG. 5A is started;
FIG. 6 is a diagram of an arrangement manner of a plurality of battery packs; and
FIG. 7 is a diagram of another wiring manner of a heating wire of heating film according to an embodiment of this application.

### Descriptions of reference numerals:

X: first direction; Y: second direction;
1: energy storage device; 2: cabinet body; 3: battery pack;
10: housing; 11: end plate; 12: side plate; 13: bottom plate;
20: cell; 21: first cell; 22: second cell; 23: third cell;
30: heating film; 31: thermally conductive layer; 32: reinforcement layer; 33: heating wire; 34: first region; 35: second region; 36: third region; 37: fourth region; 38: fifth region;
40: heat insulation film.

### DESCRIPTION OF EMBODIMENTS

The following first explains and describes some terms in embodiments of this application.

In the specification, claims, and accompanying drawings of embodiments of this application, the terms "first", "second", "third", "fourth", and the like are intended to distinguish between similar objects but do not necessarily indicate a specific order or sequence. It should be understood that data termed in such a way is interchangeable in proper circumstances, so that embodiments of this application described herein can be implemented in an order other than the order illustrated or described herein. In addition, the terms "include" and "have" and any variants thereof are intended to cover the non-exclusive inclusion. For example, a process, method, system, product, or device that includes a series of steps or units is not necessarily limited to those expressly listed steps or units, but may include other steps or units not expressly listed or inherent to such a process, method, product, or device.

In this specification, terms such as "perpendicular" are explained.

Perpendicular: Perpendicular defined in this application is not limited to absolutely perpendicular intersection (a 90-degree included angle), allowing a case in which there is no absolutely perpendicular intersection caused by an assembly tolerance, a design tolerance, impact of structure flatness, or another factor and allowing an error within a small angle range. For example, an assembly error range of 80 degrees to 100 degrees may be understood as being perpendicular.

In modern society, a large quantity of devices as small as household appliances or as large as data centers and factory production lines operate depending on electric power. Electric power supply has become one of factors for maintaining normal functioning of the modern society. Therefore, energy storage devices rapidly develop and are widely used. For example, the energy storage device may be a battery pack, an energy storage cabinet using the battery pack, a power cabinet in the data center, or even a vehicle using the battery pack. The energy storage device may be configured to: store electric energy, and supply power to a device that requires electric power for operation. The energy storage device may be used in fields such as site energy, photovoltaics, residential energy storage, commercial and industrial energy storage, and large-scale ground power station energy storage.

As a core part of the energy storage device, the battery pack determines performance and a service life of the energy storage device. In a related technology, the battery pack is in a low-temperature operating environment, and charging/discharging efficiency of the battery pack is low. In this case, charging/discharging performance of the energy storage device is decreased. To improve the charging/discharging efficiency of the battery pack in the low-temperature environment, in some embodiments, a plurality of cells in the battery pack is heated by using a heating film, to increase a temperature of an operating environment of the battery pack, and improve the charging/discharging efficiency of the battery pack. However, although arrangement of the heating film may effectively improve the charging/discharging efficiency of the battery pack to some extent, it may result in a large temperature difference between the plurality of cells in the battery pack. In addition, a longer operating time of the heating film indicates a larger temperature difference between the plurality of cells, and when a low-temperature cell reaches a target temperature, there may be a case in which a temperature of a high-temperature cell is excessively high. In this case, a service life of the cell is affected, thermal runaway of the cell may also be caused, thereby reducing a service life and lowering safety of the battery pack, and further reducing a service life and lowering safety of the energy storage device.

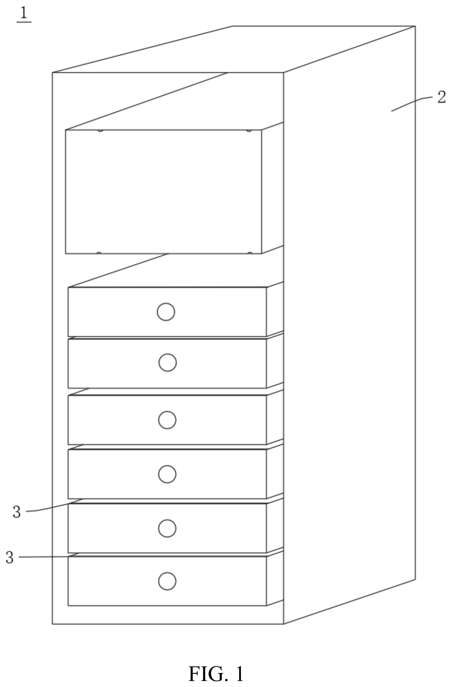

Refer to FIG. 1. To improve a service life and safety of an energy storage device 1, FIG. 1 is a diagram of a structure of the energy storage device 1 according to an embodiment. The energy storage device 1 includes a cabinet body 2 and a plurality of battery packs 3 disposed in the cabinet body 2, and the plurality of battery packs 3 are stacked in the cabinet body 2. In the battery pack 3 in this embodiment, a heating film (not shown in the figure) is disposed in the battery pack 3, to increase a temperature of an operating environment of a cell in the battery pack 3. In addition, wiring density of heating wires at different positions in the heating film is controlled, to control heating efficiency at different positions in the heating film, and selectively heat cells at different positions to different extents, so that different cells of the battery pack 3 can be heated to a preset temperature range. To be specific, temperatures of the different cells of the battery pack 3 may be neither excessively low to result in low charging/discharging efficiency, and nor be excessively high to affect a service life or safety performance of the cells. For example, wiring density of a heating wire in the heating film at a position corresponding to a cell at a position with better heat dissipation effect is increased, to improve heating efficiency of the cell at the position with the better heat dissipation effect; or wiring density of a heating wire in the heating film at a position corresponding to a cell at a position with poor heat dissipation effect is decreased, to reduce heating efficiency of the cell at the position with the poor heat dissipation effect. In this way, operating temperatures of the plurality of cells in the battery pack 3 can all reach the preset temperature range, so that a service life and safety performance of the battery pack 3 are effectively improved while charging/discharging efficiency of the battery pack 3 is ensured, thereby improving the service life and the safety of the energy storage device 1.

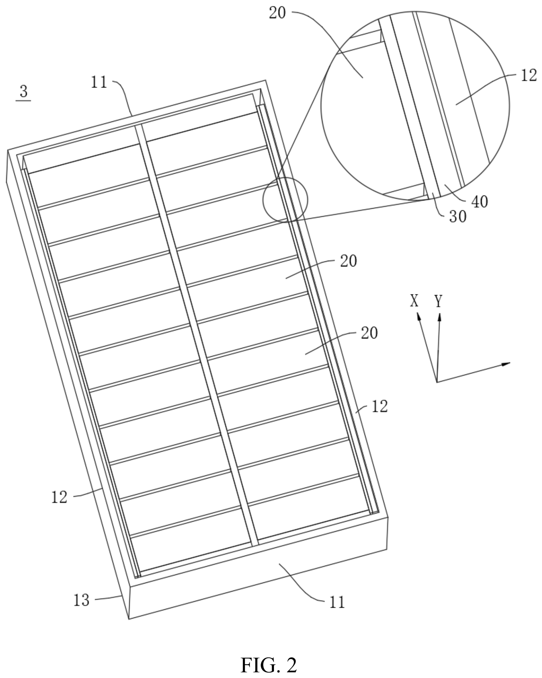

FIG. 2 is a diagram of a structure of a battery pack 3 according to an embodiment of this application. For ease of showing more features, a top plate of a housing 10 is hidden in this embodiment.

Refer to FIG. 2. In some embodiments, the battery pack 3 includes a housing 10, a plurality of cells 20, and a heating film 30.

The housing 10 includes two opposite end plates 11 in a length direction of the battery pack 3, two opposite side plates 12 in a width direction of the battery pack 3, and a top plate and a bottom plate 13 that are opposite to each other in a height direction of the battery pack 3. The two end plates 11 and the two side plates 12 are connected between the top plate and the bottom plate 13, and jointly enclose an accommodation cavity. The plurality of cells 20 and the heating film 30 are disposed in the accommodation cavity.

The plurality of cells 20 are arranged in the housing 10 in a first direction X. For example, in some implementations, the first direction X is the length direction of the battery pack 3, and the plurality of cells 20 are arranged in the length direction of the battery pack 3. It may be understood that, in some other implementations, the first direction X may alternatively be the width direction of the battery pack 3 or the height direction of the battery pack 3.

The heating film 30 is configured to heat the plurality of cells 20 to a preset temperature range, for example, within 10°C to 30°C. Specifically, the heating film 30 is attached to the plurality of cells 20, and the heating film 30 extends to two ends of the plurality of cells 20 in the first direction X, in other words, the plurality of cells 20 can all be in effective contact with the heating film 30, to ensure that the plurality of cells 20 can all be heated by the heating film 30. The heating film 30 is configured to make cells 20 at different positions in the plurality of cells 20 obtain heating efficiency to different extents, so that a maximum temperature difference between the plurality of cells 20 is less than a threshold, for example, the maximum temperature difference between the plurality of cells 20 is less than 6°C. After the plurality of cells 20 of the battery pack 3 are heated by the heating film 30 in this embodiment, temperatures of the plurality of cells 20 may all be kept within an expected temperature range, and a large temperature difference between the plurality of cells 20 is avoided, to avoid a case such as occurrence of an excessively high temperature of a high-temperature cell 20 when a low-temperature cell 20 reaches a target temperature, so that a service life and safety performance of the battery pack 3 are effectively improved while charging/discharging efficiency of the battery pack 3 can be ensured.

Refer to FIG. 2. To improve heating efficiency of the heating film 30 for the cell 20, in some implementations, the battery pack 3 further includes a heat insulation film 40, and the heat insulation film 40 is disposed between the heating film 30 and the housing 10. The heat insulation film 40 is disposed between the heating film 30 and the housing 10, to effectively reduce release of heat generated by the heating film 30 from the housing 10 to the outside, and the cell 20 is heated more effectively, thereby improving the heating efficiency for the cell 20, and effectively reducing initial preset power of the heating film 30.

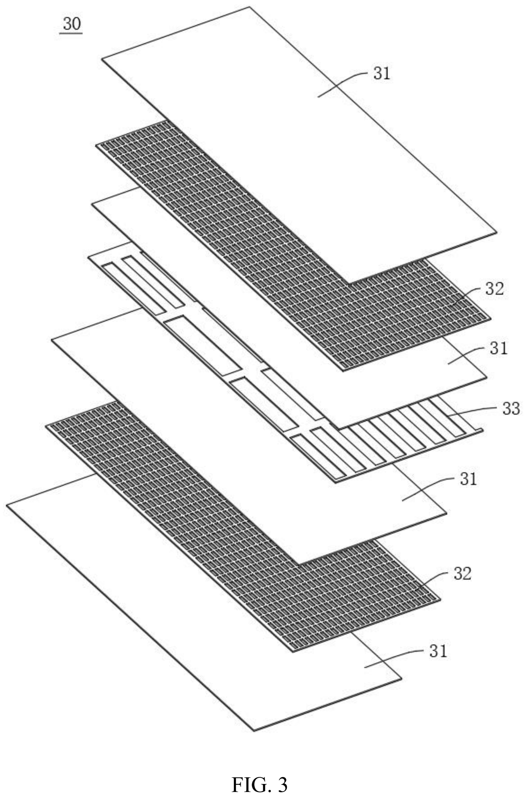

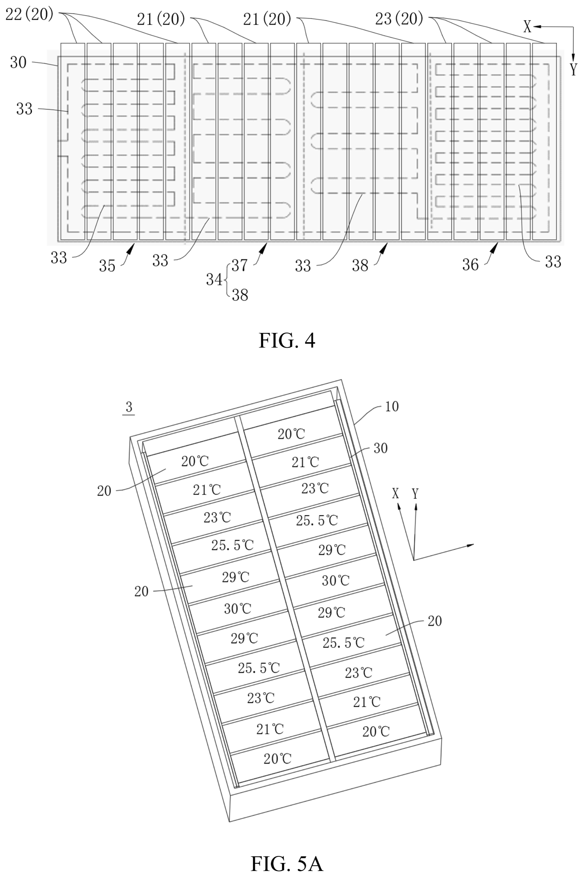

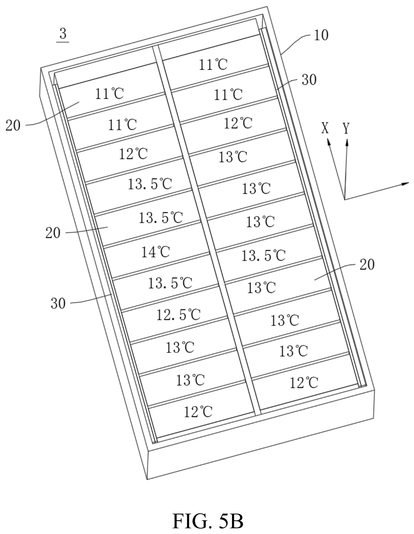

FIG. 3 is an exploded view of the heating film 30 according to the embodiment in FIG. 2. FIG. 4 is a diagram of wiring of a heating wire 33 in the heating film 30 according to the embodiment in FIG. 2. FIG. 5A is a diagram of simulated temperatures of cells 20 at different positions in the battery pack 3 when the heating film 30 is not started, and a temperature of an environment in which the battery pack in FIG. 5A is located is 20°C. FIG. 5B is a diagram of simulated temperatures when the heating film 30 of the battery pack 3 in FIG. 5A is started. For example, an ambient temperature is -10 degrees Celsius.

Refer to FIG. 3. In some embodiments, the heating film 30 includes a thermally conductive layer 31, a reinforcement layer 32, a thermally conductive layer 31, the heating wire 33, a thermally conductive layer 31, a reinforcement layer 32, and a thermally conductive layer 31 that are sequentially stacked. The heating wire 33 is configured to heat the cell 20 through a current. Reinforcement layers 32 are disposed on two sides of the heating wire 33 and may be configured to effectively secure the heating wire 33, so that the heating wire 33 can be maintained at a specified position as required, and the heating film 30 can maintain its shape. This facilitates assembly of the heating film 30. Thermally conductive layers 31 are disposed on two sides of the reinforcement layer 32 and the two sides of the heating wire 33, so that the reinforcement layer 32 and the heating wire 33 can be encapsulated, to avoid an electric leakage risk and a short-circuit risk, and heat generated by the heating wire 33 can also be effectively transferred to the cell 20. It may be understood that, in some other implementations, the reinforcement layer 32 may alternatively be not disposed on the heating film 30. A quantity of thermally conductive layers 31 may also be set as required. For example, one thermally conductive layer 31 is disposed on each of the two sides of the heating wire 33.

Refer to FIG. 3 and FIG. 4. To make the cells 20 at different positions in the plurality of cells 20 obtain heating efficiency from the heating film 30 to different extents, in the first direction X, wiring density of a heating wire 33 in a middle part of the heating film 30 is lower than wiring density of heating wires 33 at two ends of the heating film 30, to ensure that the temperatures of the plurality of cells 20 obtained after being heated can all fall within the preset temperature range, so that the maximum temperature difference between the plurality of cells 20 is less than a preset threshold. FIG. 5A is a diagram of heat dissipation effect of the cells 20 at different positions in the battery pack 3. In the first direction X, heat dissipation effect of cells 20 at two ends in the plurality of cells 20 is good, and heat dissipation effect of cells 20 in a middle part is poor. Therefore, in the first direction X, the wiring density of the heating wire 33 in the middle part of the heating film 30 is set to be lower than the wiring density of the heating wires 33 at the two ends of the heating film 30. Higher wiring density of the heating wire 33 indicates higher heating efficiency of the heating film 30, and lower wiring density of the heating wire 33 indicates lower heating efficiency of the heating film 30. Because the density of the heating wire 33 in the middle part of the heating film 30 is lower, heating effect of the heating film 30 for the cells 20 located in the middle part is poorer. In addition, because the density of the heating wires 33 at the two ends of the heating film 30 is higher, the cells 20 at the two ends can obtain higher heating efficiency from the heating film 30. In this way, the cells 20 with poorer heat dissipation effect can obtain low heating efficiency, and the cells 20 with better heat dissipation effect can obtain higher heating efficiency from the heating film 30. The heating wire 33 of the heating film 30 is appropriately arranged, so that the temperatures of the plurality of cells 20 of the battery pack 3 obtained after being heated can all be kept within the expected temperature range (as shown in FIG. 5B), to improve the charging/discharging efficiency of the battery pack 3. In addition, temperature consistency of the plurality of cells 20 can be improved (as shown in FIG. 5B), to avoid the case such as the occurrence of the excessively high temperature of the high-temperature cell 20 when the low-temperature cell 20 reaches the target temperature, and avoid short-board effect in the battery pack 3 caused by an excessively large temperature difference between the cells 20, thereby reducing impact on performance and the service life of the battery pack 3, and further reducing safety risks such as thermal runaway of the battery pack 3. In conclusion, the service life and the safety performance of the battery pack 3 are effectively improved while the charging/discharging efficiency of the battery pack 3 in this embodiment can be ensured.

It may be understood that the wiring density in this specification is density of the heating wire 33 per unit area of a region. The higher density of the heating wire 33 in this embodiment indicates higher heating power, and the lower density of the heating wire 33 indicates lower power of the heating wire 33. For example, in some implementations, thicknesses of heating wires 33 at positions in the heating film 30 are approximately the same, so that the higher density of the heating wire 33 indicates the higher heating power, and the lower density of the heating wire 33 indicates the lower power of the heating wire 33.

Refer to FIG. 4. In some implementations, for ease of description, it is assumed that the heating film 30 includes a plurality of regions arranged in the first direction X, for example, including a first region 34 in which wiring density of a heating wire 33 is low, and a second region 35 and a third region 36 in which wiring density of a heating wire 33 is high. The first region 34 is located between the second region 35 and the third region 36 in the first direction X. For example, in some implementations, the first region 34 is the middle part of the heating film 30 in the first direction X, and the second region 35 and the third region 36 are the two end parts of the heating film 30 in the first direction X. Because the wiring density of the heating wire 33 in the first region 34 is lower than the wiring density of the heating wire 33 in the second region 35 and the wiring density of the heating wire 33 in the third region 36, heating power of the first region 34 is less than heating power of the second region 35 and that of the third region 36.

For ease of description, a cell 20 attached to the first region 34 is disposed as a first cell 21, and the first cell 21 is heated through the heating wire 33 in the first region 34. A cell 20 attached to the second region 35 is disposed as a second cell 22, and the second cell 22 is heated through the heating wire 33 in the second region 35. Similarly, a cell 20 attached to the third region 36 is disposed as a third cell 23, and the third cell 23 is heated through the heating wire 33 in the third region 36. To make all temperatures of the first cell 21, the second cell 22, and the third cell 23 obtained after being heated by the heating film 30 be within the preset temperature range, the first cell 21 is located between the second cell 22 and the third cell 23 in the first direction X, that is, the first cell 21 is located in a middle part of the plurality of cells 20, and heat dissipation effect of the first cell 21 at this position is poor, so that the preset temperature range can be reached by heating the heating wire 33 in the first region 34 with low heating efficiency, and a risk of the thermal runaway caused by excessively high temperature of the first cell 21 obtained after being heated can be effectively avoided. The second cell 22 and the third cell 23 are located at two ends of the first cell 21, so that the second cell 22 and the third cell 23 are close to the two end plates 11 of the housing 10, and heat dissipation effect is good. Therefore, the second cell 22 is heated by the heating wire 33 in the second region 35 with higher heating efficiency, and the third cell 23 is heated by the heating wire 33 in the third region 36 with higher heating efficiency, it can be effectively ensured that the second cell 22 and the third cell 23 can be heated to the preset temperature range, so that charging/discharging efficiency of the second cell 22 and that of the third cell 23 can be effectively improved. In addition, because the second cell 22 and the third cell 23 have good heat dissipation, the second cell 22 and the third cell 23 are heated by heating wires 33 in the second region 35 in the third region 36 with higher heating efficiency, so that the risk of the thermal runaway caused by excessively high temperatures of the second cell 22 and the third cell 23 obtained after being heated can still be avoided.

It may be understood that each region may correspond to one or more cells 20. For example, a heating wire 33 in one region correspondingly heats a plurality of cells 20.

Refer to FIG. 4. In some implementations, the wiring density of the heating wire 33 in the third region 36 is higher than the wiring density of the heating wire 33 in the second region 35, so that heating efficiency of the heating wire 33 in the third region 36 is higher than heating efficiency of the heating wire 33 in the second region 35. The heating efficiency of the heating wire 33 in the third region 36 is designed to be different from the heating efficiency of the heating wire 33 in the second region 35, and after a plurality of battery packs 3 are arranged at a short distance in a cabinet body 2, temperature uniformity of different cells 20 in the battery pack 3 obtained after the cells are heated by the heating film 30 can be effectively ensured. For example, two adjacent battery packs 3 are stacked, and the first direction X is consistent with a stacking direction, so that ends at which second regions 35 of the two adjacent battery packs 3 are located are close to each other. In other words, an end at which the second region 35 of one battery pack 3 is located is close to an end at which the second region 35 of the other battery pack 3 is located. Because the two adjacent battery packs 3 are stacked, heat dissipation effect at a position in which the two battery packs 3 are in contact is poor. In other words, heat dissipation effect at a position in which the second region 35 is located is poor. Heating efficiency of the second region 35 is lower than heating efficiency of the third region 36, so that the second cell 22 corresponding to the second region 35 with low heat dissipation efficiency can be heated by the heating wire 33 in the second region 35, to avoid overheating. Heat dissipation effect of the third cell 23 corresponding to the third region 36 is better, so that the third cell 23 is heated by the heating wire 33 in the third region 36 with higher heating efficiency, and it can ensure that the third cell 23 can be heated to the preset temperature range. In conclusion, the temperature uniformity of the plurality of cells 20 in the battery pack 3 can be effectively ensured, and the service life and safety of the battery pack 3 are improved.

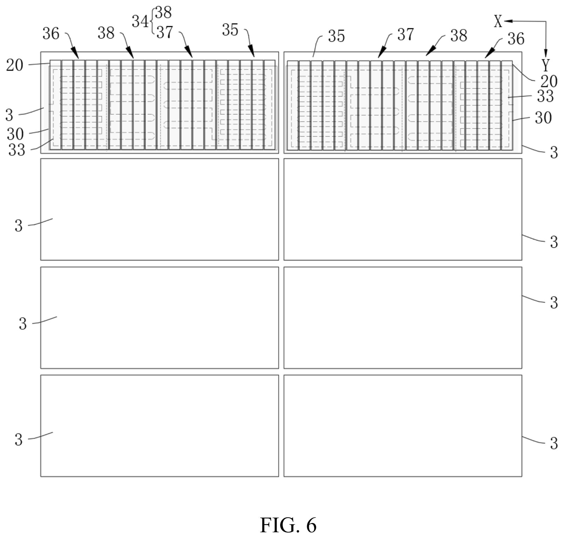

For another example, in some implementations, FIG. 6 is a diagram of an arrangement manner of the plurality of battery packs 3. At least two clusters of the battery packs 3 are disposed in the cabinet body 2. The two clusters of the battery packs 3 are arranged in the first direction X. Ends at which second regions 35 of two adjacent clusters of the battery packs 3 are located are close to each other in the first direction X. In other words, the two adjacent battery packs 3 are arranged in the first direction X, and in two heating films 30 in the two adjacent battery packs 3, two second regions 35 are located between two third regions 36 in the first direction X. Because the heating efficiency of the second region 35 is low, a distance between the two clusters of the battery packs 3 can be reduced, and space utilization of the battery pack 3 in the cabinet body 2 can be improved, to improve energy density of an energy storage device 1. In addition, heat dissipation efficiency at a position in which the two clusters of the battery packs 3 are close to each other may be reduced. Because the heating efficiency of the second region 35 is lower than the heating efficiency of the third region 36, the second cell 22 corresponding to the second region 35 with the low heat dissipation efficiency can be heated by the heating wire 33 in the second region 35, to avoid overheating. The heat dissipation effect of the third cell 23 corresponding to the third region 36 is better, so that the third cell 23 is heated by the heating wire 33 in the third region 36 with the higher heating efficiency, and it can ensure that the third cell 23 can be heated to the preset temperature range. In conclusion, the temperature uniformity of the plurality of cells 20 in the battery pack 3 can be effectively ensured, and the service life and the safety of the battery pack 3 are improved.

Refer to FIG. 4 and FIG. 6. In some implementations, the first region 34 includes a fourth region 37 and a fifth region 38 that are arranged in the first direction X, and the fourth region 37 is located on a side that is of the fifth region 38 and that is close to the second region 35. In other words, the fourth region 37 is close to the second region 35, and the fifth region 38 is close to the third region 36. Because the ends at which the second regions 35 of the two adjacent battery packs 3 are located are close to each other in the first direction X, heat dissipation effect of an end corresponding to the second region 35 is poor. In this case, heat dissipation effect of a cell 20 corresponding to the fourth region 37 adjacent to the second region 35 is lower than that of a cell 20 corresponding to the fifth region 38 adjacent to the third region 36. To ensure temperature uniformity of a heated cell 20 corresponding to the fourth region 37 and a heated cell 20 corresponding to the fifth region 38, wiring density of a heating wire 33 in the fifth region 38 is higher than wiring density of a heating wire 33 in the fourth region 37, so that the cell 20 corresponding to the fourth region 37 and the cell 20 corresponding to the fifth region 38 can be differentially heated, and a temperature difference between the heated cell 20 corresponding to the fourth region 37 and the heated cell 20 corresponding to the fifth region 38 is controlled within the threshold, to improve the temperature uniformity of the plurality of cells 20, and improve the service life and the safety performance of the battery pack 3.

It may be understood that, in some other implementations, the heating film 30 may be further divided into more regions. Specifically, with reference to a quantity of the plurality of cells 20 arranged in the first direction X, a larger quantity of cells 20 indicates a larger quantity of regions included in the heating film 30, so that the plurality of cells 20 can all be appropriately heated, to ensure the temperature uniformity of the plurality of cells 20.

Refer to FIG. 4. In some implementations, to facilitate layout of the heating wire of the heating film 30, the heating wire 33 in the first region 34, the heating wire 33 in the second region 35, and the heating wire 33 in the third region 36 are connected in series, so that a same current flows through the heating wire 33 in the first region 34, the heating wire 33 in the second region 35, and the heating wire 33 in the third region 36, to effectively and precisely control heating power of each region, and improve temperature uniformity of the plurality of cells 20 obtained after being heated.

For example, in some implementations, the heating wire 33 in the first region 34, the heating wire 33 in the second region 35, and the heating wire 33 in the third region 36 are all arranged by using a same heating wire.

It may be understood that, in some other implementations, the heating wire 33 in the first region 34, the heating wire 33 in the second region 35, and the heating wire 33 in the third region 36 are connected in parallel, to independently control the heating wire 33 in the first region 34, the heating wire 33 in the second region 35, and the heating wire 33 in the third region 36, to appropriately heat different cells 20 as required. For example, in some implementations, the heating wire 33 in the second region 35, the heating wire 33 in the fourth region 37, the heating wire 33 in the fifth region 38, and the heating wire 33 in the third region 36 are disposed in parallel.

Refer to FIG. 4. In some implementations, the heating wire 33 in the first region 34 is arranged with spaced wiring in a second direction Y, the heating wire 33 in the second region 35 is arranged with spaced wiring in the second direction Y, the heating wire 33 in the third region 36 is arranged with spaced wiring in the second direction Y, and the second direction Y is disposed perpendicular to the first direction X. Wiring density of the heating wire 33 in each region may be determined by calculating a quantity of heating wires 33 in each region in the second direction Y. A larger quantity of heating wires 33 in the second direction Y indicates a higher wiring density of the heating wire 33 on a surface of the region.

In some implementations, the heating wire 33 in the first region 34 is arranged with evenly spaced wiring in the second direction Y, the heating wire 33 in the second region 35 is arranged with evenly spaced wiring in the second direction Y, and the heating wire 33 in the third region 36 is arranged with evenly spaced wiring in the second direction Y, to improve the temperature uniformity of the cell 20 during heating. It may be understood that, in some other implementations, the heating wire 33 in the first region 34 may alternatively not be arranged with evenly spaced wiring in the second direction Y, the heating wire 33 in the second region 35 may alternatively not be arranged with evenly spaced wiring in the second direction Y, and the heating wire 33 in the third region 36 may alternatively not be arranged with evenly spaced wiring in the second direction Y.

Refer to FIG. 2 and FIG. 3. In some implementations, the heating film 30 is disposed between the side plate 12 of the housing 10 and the plurality of cells 20. The heating film 30 is disposed between the side plate 12 of the housing 10 and the plurality of cells 20, so that the cell 20 can be heated by the heating film 30, the thermally conductive layer 31 of the heating film 30 is insulative, and the heating film 30 can further be utilized to insulatively isolate the plurality of cells 20 from the side plate 12, thereby making the heating film 30 serve double functions, and increasing a function of the battery pack 3 without complicating a structure of the battery pack 3.

It may be understood that, in some other implementations, the heating film 30 may alternatively be disposed between the bottom plate 13 of the housing 10 and the cell 20. Alternatively, the heating film 30 is disposed between two battery modules. Alternatively, the heating film 30 may be disposed at the foregoing plurality of positions.

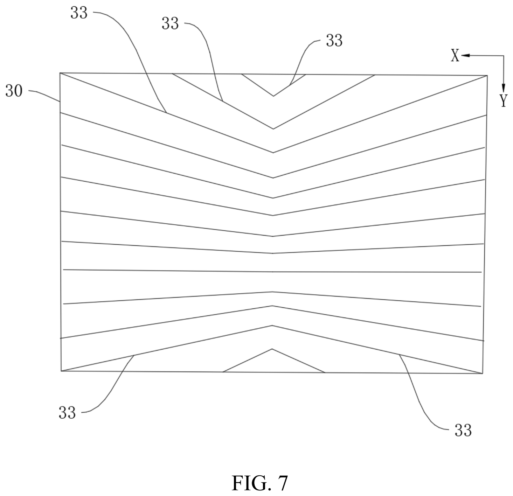

FIG. 7 is a diagram of another wiring manner of a heating wire 33 of a heating film 30 according to an embodiment of this application. This embodiment is a new wiring manner formed by changing the wiring manner of the embodiment in FIG. 4. For a structure of the heating film 30, a manner of cooperating with the cell 20, and the like, refer to the foregoing embodiment. Details are not described herein again.

Refer to FIG. 7. In some implementations, from a middle part of the heating film 30 to either end of the heating film 30 in a first direction X, wiring density of a heating wire 33 in the heating film 30 gradually increases. In a plurality of cells 20, heat dissipation effect of cells 20 located in a middle in the first direction X is the worst, and heat dissipation effect of cells 20 at two ends is the best, and the heat dissipation effect exhibits a gradually change trend. Therefore, in this embodiment, the wiring density of the heating wire 33 in the heating film 30 gradually increases from the middle part of the heating film 30 to the either end of the heating film 30 in the first direction X. In this way, temperatures of the plurality of cells 20 may be controlled more accurately, so that temperature uniformity of the plurality of cells 20 is better. For example, a temperature difference between the plurality of cells 20 is controlled within a smaller threshold, for example, 3°C, to improve temperature consistency of the plurality of cells 20 of a battery pack 3, thereby improving a service life of the battery pack 3.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery pack, wherein the battery pack comprises a housing and a plurality of cells and a heating film that are disposed in the housing, the plurality of cells are arranged in a first direction, the heating film is attached to the plurality of cells, and two ends of the heating film in the first direction extend to two ends of the plurality of cells; and
in the first direction, wiring density of a heating wire in a middle part of the heating film is lower than wiring density of heating wires at the two ends of the heating film.

2. The battery pack according to claim 1, wherein the heating film comprises a plurality of regions arranged in the first direction, the plurality of regions comprise a first region and a second region and a third region that are located on two sides of the first region, the first region corresponds to the middle part of the heating film, the second region and the third region correspond to the two ends of the heating film, wiring density of a heating wire in the first region is lower than wiring density of a heating wire in the second region and wiring density of a heating wire in the third region, and the wiring density of the heating wire in the second region is lower than the wiring density of the heating wire in the third region.

3. The battery pack according to claim 2, wherein a first cell of the plurality of cells is disposed in the first region, a second cell of the plurality of cells is disposed in the second region, a third cell of the plurality of cells is disposed in the third region, and the first cell is located between the second cell and the third cell in the first direction.

4. The battery pack according to claim 2 or 3, wherein the first region comprises a fourth region and a fifth region that are arranged in the first direction, the fourth region is located on a side that is of the fifth region and that is close to the second region, and wiring density of a heating wire in the fifth region is higher than wiring density of a heating wire in the fourth region.

5. The battery pack according to any one of claims 2 to 4, wherein the heating wire in the first region, the heating wire in the second region, and the heating wire in the third region are connected in series.

6. The battery pack according to any one of claims 2 to 4, wherein the heating wire in the first region, the heating wire in the second region, and the heating wire in the third region are connected in parallel.

7. The battery pack according to any one of claims 2 to 6, wherein the heating wire in the first region is arranged with evenly spaced wiring in a second direction, the heating wire in the second region is arranged with evenly spaced wiring in the second direction, the heating wire in the third region is arranged with evenly spaced wiring in the second direction, and the second direction is disposed perpendicular to the first direction.

8. The battery pack according to any one of claims 1 to 6, wherein in the first direction, from the middle part of the heating film to either end of the heating film, wiring density of a heating wire in the heating film gradually increases.

9. The battery pack according to any one of claims 1 to 8, wherein the heating film is disposed between a side plate of the housing and the plurality of cells, or the heating film is disposed between a bottom plate of the housing and the plurality of cells.

10. The battery pack according to any one of claims 1 to 9, wherein the battery pack further comprises a heat insulation film, and the heat insulation film is disposed between the heating film and the housing.

11. An energy storage device, wherein the energy storage device comprises a cabinet body and the plurality of battery packs according to any one of claims 1 to 10, and the plurality of battery packs are disposed in the cabinet body.

12. The energy storage device according to claim 11, wherein regions corresponding to two ends of the heating film in a first direction are respectively a second region and a third region, wiring density of a heating wire in the second region is lower than wiring density of a heating wire in the third region, two adjacent battery packs are arranged in the first direction, and in two heating films in the two adjacent battery packs, two second regions are located between two third regions in the first direction.
